# EUROPÄISCHE PATENTANMELDUNG

(11) **EP 1 850 110 A1**
(43) Veröffentlichungstag der Anmeldung: **31.10.2007**
(21) Anmeldenummer: 06113027.4
(22) Anmeldetag: 25.04.2006
(51) Int. Cl.: G01N 5/04

(54) **Messgerät zur gravimetrischen Feuchtigkeitsbestimmung**

(71) Anmelder: Mettler-Toledo AG, 8606 Greifensee (CH)
(72) Erfinder: Lüchinger, Paul, 8610 Uster (CH)

(57) **Zusammenfassung**

Im Gehäuse (20) eines Messgerätes (10,110,210...) zur gravimetrischen Feuchtigkeitsbestimmung ist eine Wägevorrichtung (40) angeordnet, die einen Lastaufnahmebereich (47) und eine mit diesem Lastaufnahmebereich verbindbare Probeaufnahme (60) aufweist. Ferner weist das Messgerät innerhalb des Gehäuses einen Prüfraum (30) auf, wobei die Probeaufnahme (60) in Messstellung im Prüfraum angeordnet ist. Ein im Prüfraum angeordnetes Mittel zur Erwärmung einer auf der Probeaufnahme (60) aufgelegten Probe (62) weist eine erste Strahlungsquelle (31) und eine zweite Strahlungsquelle (32) auf, wobei die Probeaufnahme zwischen der ersten Strahlungsquelle und der zweiten Strahlungsquelle angeordnet ist.

## Beschreibung

Die vorliegende Erfindung bezieht sich auf ein Messgerät zur gravimetrischen Feuchtigkeitsbestimmung.

Zur Bestimmung des Feuchtigkeitsgehaltes einer Probe wird diese getrocknet und das Gewicht vor und nach dem Trocknungsvorgang manuell bestimmt. Durch die umfangreichen Arbeitsabläufe, die mit dieser Methode verbunden sind, ist diese sehr teuer und anfällig für Fehler.

Gegebenenfalls kann der Gewichtsverlust auch während des Trocknungsvorganges gemessen werden. Dabei nimmt bei einer bekannten Probe in Abhängigkeit der Temperatur, der Trocknungszeit und den Prüfraumbedingungen deren Gewichtswert ab, welcher einer Gewicht- Zeit- Kurve folgt, die sich asymptotisch dem Trockengewicht der Probe annähert. Die Kurve wird für die jeweilige Probe durch Vergleichsversuche ermittelt und kann in einer Näherungsformel mathematisch ausgedrückt werden. Aufgrund der zur Verfügung stehenden elektronischen Mittel kann ein entsprechend ausgerüstetes Messgerät zur gravimetrischen Feuchtigkeitsbestimmung den Feuchtigkeitsgehalt einer Probe anhand der gemessen Kurvenparameter und der Trocknungszeit errechnen und auf einer Anzeigeeinheit anzeigen. Durch diese Methode muss das zu trocknende Gut nicht mehr vollständig durchgetrocknet sein, es genügt die Ermittlung der Koordinaten zweier Erfassungspunkte im Gewicht-Zeitdiagramm.

Wie bereits eingangs erwähnt, verändert sich das Gewicht einer Probe im Wesentlichen in Abhängigkeit von der Temperatur, der Trocknungszeit und den Prüfraumbedingungen. Vor allem die hohen Anforderungen an den Prüfraum beschränken die auf dem Markt erhältlichen Geräte in ihrer Genauigkeit.

Als Prüfraum wird ein durch das Gehäuse des Messgerätes umschlossener, zwecks Einführung beziehungsweise Entfernung einer Probe öffnenbarer Raum bezeichnet. Im Inneren des Prüfraums sind zudem eine Probeaufnahme und ein Mittel zur Erwärmung der Probe angeordnet. Die Probeaufnahme ist mit einem gravimetrischen Messgerät verbunden.

Üblicherweise wird eine dünne Schicht der Probe auf eine ebene Probeaufnahme, beispielsweise eine Probeschale aufgebracht. Die Schale wird im Messgerät zur gravimetrischen Feuchtigkeitsbestimmung in ihrer flächigen Ausdehnung vorzugsweise horizontal und parallel zur flächigen Ausdehnung des Mittels zur Erwärmung der Probe angeordnet, um eine gleichmässige Erwärmung der Probe zu ermöglichen.

Als Mittel zur Erwärmung der Probe werden verschiedene Strahlungsquellen wie Heizstrahler, Mikrowellengeneratoren, Halogen- und Quarzlampen verwendet. Durch Versuche konnte festgestellt werden, dass eine der Hauptursachen einer ungenauen Messwerterfassung bei bestehenden Messgeräten zur gravimetrischen Feuchtigkeitsbestimmung die Art der verwendeten Strahlungsquellen und deren Anordnung im Prüfraum ist.

Ein Messgerät zur gravimetrischen Feuchtigkeitsbestimmung der genannten Gattung ist aus der europäischen Patentschrift EP 0 611 956 B1 bekannt. Bei diesem Gerät erfolgt die Beschickung der Waagschale ausserhalb des Messgerätes zur gravimetrischen Feuchtigkeitsbestimmung. Dazu wird die Waage auf einem schubladenförmigen Auszug aus dem Messgerätgehäuse herausgefahren. Als Strahlungsquelle wird eine ringförmige Halogenlampe eingesetzt, welche im Betriebszustand oberhalb der Probeaufnahme angeordnet ist.

Eine der Möglichkeiten, eine thermische Zersetzung der Probe zu verhindern besteht darin, dass als Strahlungsquelle ein Mikrowellengenerator verwendet wird, wie dies in der US 6,521,876 B1 offenbart ist. Ein Nachteil bei der Erwärmung durch Mikrowellen besteht darin, dass Proben mit inhomogener Feuchtigkeitsverteilung auch inhomogen erwärmt werden. Die aus den erwärmten Stellen der Probe entweichenden flüchtigen Komponenten, insbesondere Feuchtigkeit in Form von Wasserdampf kann in den kalten Stellen der Probe teilweise kondensieren, so dass in der Tendenz zuerst eine Verteilung der Feuchtigkeit innerhalb der Probe stattfindet, bevor sie aus dieser ausgetrieben wird. Die dadurch entstehenden Zeitfehler limitieren die Genauigkeit bei einer Auswertung durch das oben beschriebene Berechnungsverfahren. Alternativ zur Anwendung eines Berechnungsverfahrens bleibt lediglich, dass möglichst die gesamte Feuchtigkeit ausgetrieben werden muss. Je weniger Feuchtigkeit in der Probe aber vorhanden ist, desto geringer ist die Wärmeentwicklung. Hilfsmittel wie Wägegefässe aus Kunststoff, welche die unter dem Einfluss von Mikrowellen Austreibungswärme erzeugen könnten, haben oft selbst einen gewissen Feuchtigkeitsgehalt oder eine Affinität zu Feuchtigkeit, so dass statt eines Trocknungsvorganges ein Austausch der Feuchtigkeit zwischen der Probe und dem Wägegefäss stattfinden kann. Es kann auch an den Wägegefässen aus Kunststoff zu lokaler Überhitzung kommen, wobei das Kunststoffmaterial zersetzt werden kann und der Massenverlust entweichender flüchtiger Zersetzungsprodukte oder vom Wägegefäss sublimiertes Material fälschlicherweise als Gewichtsverlust der Probe gemessen wird.

Aus den vorangehend erläuterten Gründen ist eine Absolutwertbestimmung des Feuchtigkeitsgehaltes mit einem Messgerät zur gravimetrischen Feuchtigkeitsbestimmung kaum möglich. Demzufolge wird für die genauere Bestimmung des Feuchtigkeitsgehalts eines Stoffes immer noch das bekannte Karl-Fischer-Titrationsverfahren angewendet. Dieses Verfahren ist sehr arbeitsintensiv, anfällig auf Anwenderfehler und teuer.

Aufgabe der vorliegenden Erfindung ist es daher, im eingangs angeführten Messgerät zur gravimetrischen Feuchtigkeitsbestimmung einen Prüfraum mit verbesserten Prüfbedingungen zu schaffen, welcher eine präzisere Bestimmung des Feuchtigkeitsgehaltes einer Probe ermöglicht.

Diese Aufgabe wird dadurch gelöst, dass im Gehäuse eines Messgerätes zur gravimetrischen Feuchtigkeitsbestimmung eine Wägevorrichtung angeordnet ist, die einen Lastaufnahmebereich und eine mit diesem Lastaufnahmebereich verbindbare Probeaufnahme aufweist. Ferner weist das Messgerät innerhalb des Gehäuses einen Prüfraum auf, wobei die Probeaufnahme in Messstellung im Prüfraum angeordnet ist. Ein im Prüfraum angeordnetes Mittel zur Erwärmung einer auf der Probeaufnahme aufgelegte Probe, weist eine erste Strahlungsquelle und eine zweite Strahlungsquelle auf, wobei die Probeaufnahme zwischen der ersten Strahlungsquelle und der zweiten Strahlungsquelle angeordnet ist. Idealerweise ist die erste Strahlungsquelle bezogen auf die Lastrichtung oberhalb der Probeaufnahme angeordnet und die zweite Strahlungsquelle unterhalb der Probeaufnahme angeordnet.

Der Begriff Messstellung bedeutet, dass die im Messgerät angeordneten Elemente derart zueinander stehen, dass eine Messung durchgeführt werden kann. Konkret bedeutet dies, dass sich die Probeaufnahme zwischen der ersten Strahlungsquelle und der zweiten Strahlungsquelle befindet.

Vorzugsweise ist die Probeaufnahme in Messstellung in ihrer flächigen Ausdehnung in einer Ebene orthogonal zur Lastrichtung angeordnet, wobei die erste Strahlungsquelle und die zweite Strahlungsquelle in ihrer flächigen Ausdehnung parallel zur Probeaufnahme angeordnet sind.

Grundsätzlich würde für ein Messgerät zur gravimetrischen Feuchtigkeitsbestimmung eine einzige Strahlungsquelle ausreichen, da lediglich die Feuchtigkeit aus der Probe ausgetrieben und die Probe selbst möglichst geschont werden soll. Deshalb sollte die in den Prüfraum eingebrachte Heizleistung einen von der Probe abhängigen Wert nicht übersteigen. Die erfindungsgemässe Anordnung weist jedoch gegenüber dem bekannten Stand der Technik erhebliche Vorteile auf. Durch die Anordnung zweier Strahlungsquellen unterhalb und oberhalb der Probeaufnahme ist eine wesentlich besser beeinflussbare Wärmeverteilung im Prüfraum und in der Probe erreichbar. Die Probe wird gleichmässiger und während einer kürzeren Zeit durchwärmt. Die Intensität der Strahlung beider Strahlungsquellen kann der Probe und der verwendeten Probeaufnahme entsprechend angepasst werden. Durch die Wahl eines geeigneten Temperaturprofils über die Schichtstärke der aufgebrachten Probe kann die Austreibung der Feuchtigkeit zusätzlich beschleunigt werden, ohne dass die Probe zersetzt wird. Bei der Auftragung der Probe auf die Probeaufnahme entstehen zwangsläufig lokal unterschiedliche Schichtstärken. Die Unterschiede sind abhängig von der Probe und der Auftragungsmethode. Der Einfluss auf das Messergebnis infolge der unregelmässigen Verteilung der Probe auf der Probeaufnahme sinkt durch die besser beeinflussbare Wärmeverteilung in der Probe.

Mit Probeaufnahme wird im Wesentlichen der Lastaufnehmer beziehungsweise die Waagschale eines gravimetrischen Messgerätes bezeichnet.

Idealerweise sind die Wägevorrichtung und der Prüfraum nebeneinander im Gehäuse des Messgerätes angeordnet. Mindestens eine, vorzugsweise der Wägevorrichtung zugewandte Wand des Prüfraumes weist mindestens eine Durchführung auf, durch welche ein Verbindungsglied hindurchreicht und die Wägevorrichtung mit der im Prüfraum angeordneten Probeaufnahme verbindet.

Ferner sind in einer bevorzugten Ausführung die Emissionen der ersten Strahlungsquelle und die Emissionen der zweiten Strahlungsquelle unabhängig voneinander steuerbar und/oder regelbar. Idealerweise weist das Messgerät eine Steuer- und/oder Regelelektronik auf, um verschiedenste Messabläufe mit definierbaren Temperatur- Zeitprofilen vorzugeben und die erfassten Messwerte gegebenenfalls auch direkt auszuwerten.

Dazu wird die Temperatur im Prüfraum mit geeigneten Mitteln, beispielsweise einem im Prüfraum angeordneten Temperatursensor gemessen. Zur genaueren Erfassung der Prüfbedingungen kann zusätzlich im Prüfraum auch ein Feuchtigkeitssensor angeordnet sein.

Als Strahlungsquelle kann aus einer Vielzahl von Möglichkeiten ausgewählt werden. Beispielsweise kann eine Heizplatte, eine Heizfolie, ein Heizstrahler, eine Heizschlange, verschiedene breitbandige Lichtquellen wie eine Halogen- Wärmelampe oder eine Quarz- Wärmelampe, eine monochromatische Lichtquelle, ein Peltier-Element oder ein Mikrowellengenerator zur Erwärmung der Probe verwendet werden.

Besonders interessante Möglichkeiten bietet eine Kombination verschiedener Strahlungsquellen, so dass die erste Strahlungsquelle ein von der zweiten Strahlungsquelle unterschiedliches Strahlungssystem aufweist. Je nach zu prüfender Probe kann sich beispielsweise die Kombination eines Mikrowellengenerators mit einer Heizplatte als besonders vorteilhaft erweisen.

Um dem Messgerät grösstmögliche Flexibilität zu verleihen, sollte mindestens eine der Strahlungsquellen über mindestens eine Steckverbindung mechanisch mit dem Gehäuse und/oder elektrisch mit einer Energiequelle verbunden sein. Dies ist aus zwei Gründen vorteilhaft. Erstens ist der Austausch einer Strahlungsquelle wesentlich einfacher zu bewerkstelligen. Zweitens können verschiedene Strahlungsquellen-Typen zu einem Set von Modulen zusammengestellt werden, so dass der Anwender des Messgerätes aus diesem Set für seine anstehenden Versuche die ideale Kombination von Strahlungsquellen auswählen kann.

Damit die aus der Probe ausgetriebenen Gase und/oder Dämpfe oberhalb der Probe gleichmässig entfernt werden können, ist die Strahlungsquelle idealerweise mit Öffnungen zur Durchführung von flüchtigen Substanzen und/oder Dämpfen versehen.

Zur einfachen Beschickung beziehungsweise Entnahme der Probe aus dem Prüfraum kann die Probeaufnahme mit dem Lastaufnahmebereich koppelbar, beziehungsweise vom Lastaufnahmebereich entkoppelbar ausgestaltet sein.

Der Aufbau des Messgerätes kann verschiedene Ausgestaltungen aufweisen. In einer ersten Ausgestaltung des Messgerätes sind die erste Strahlungsquelle und die zweite Strahlungsquelle miteinander mechanisch als Einheit verbunden, wobei diese Einheit von einem bewegbaren Gehäuseteil getragen wird und um eine im Wesentlichen vertikal stehende Achse verschwenkbar ist. Je nach Ausgestaltung dieser Einheit kann im verschwenkten Zustand derselben die Probenaufnahme frei zugänglich sein.

In einer zweiten Ausgestaltung des Messgerätes ist die erste Strahlungsquelle mit einem sie tragenden, als Deckel ausgestalteten bewegbaren Gehäuseteil des Gehäuses verbunden, und dieser Deckel ist um eine im Wesentlichen horizontale Schwenkachse an einem feststehenden Gehäuseteil des Gehäuses schwenkbar gelagert. Die zweite Strahlungsquelle ist mit dem feststehenden Gehäuseteil fest verbunden, wobei im aufgeklappten Zustand des Deckels die Probenaufnahme frei zugänglich sein kann.

In einer dritten Ausgestaltung des Messgerätes sind die erste und die zweite Strahlungsquelle mit dem feststehenden Gehäuseteil fest verbunden und die Wägevorrichtung zusammen mit der Probenaufnahme auf einem bewegbaren Gehäuseteil linear geführt und aus dem Gehäuse ausfahrbar ausgebildet. Je nach Ausgestaltung der Wägevorrichtung kann im ausgefahrenen Zustand die Probenaufnahme frei zugänglich sein.

In einer vierten Ausgestaltung des Messgerätes sind die erste und die zweite Strahlungsquelle mit dem feststehenden Gehäuseteil fest verbunden und die Wägevorrichtung zusammen mit der Probenaufnahme um eine im Wesentlichen vertikal stehende Achse schwenkbar gelagert. Je nach Ausgestaltung der Wägevorrichtung kann bei verschwenktem Zustand die Probenaufnahme frei zugänglich sein.

In einer fünften Ausgestaltung des Messgerätes ist die Wägevorrichtung zusammen mit der Probenaufnahme mit dem Gehäuse fest verbunden und mindestens die erste Strahlungsquelle auf einem im Wesentlichen horizontal verfahrbaren bewegbaren Gehäuseteil angeordnet. In der Messposition befindet sich diese Strahlungsquelle oberhalb der Probeaufnahme. In der Beschickungsposition überdeckt diese Strahlungsquelle die Probenaufnahme nicht mehr, wodurch diese frei zugänglich ist. Es können selbstverständlich auch die erste und die zweite Strahlungsquelle im bewegbaren Gehäuseteil angeordnet sein, so dass sich in der Beschickungsposition keine der Strahlungsquellen mehr unterhalb oder oberhalb der Probenaufnahme befindet.

In einer bevorzugten Ausgestaltung ist im Prüfraum anschliessend, vorzugsweise oberhalb der ersten Strahlungsquelle eine Absaugvorrichtung angeordnet. Diese dient der Entfernung der flüchtigen Substanzen und/oder den Dämpfen. Die Absaugvorrichtung erzeugt im Prüfraum einen leichten Unterdruck, wodurch ein gasförmiges Medium ausserhalb des Messgerätes, beispielsweise über Durchbrüche in den Wänden des Prüfraums angesaugt wird. Das gasförmige Medium wird in geeigneter Weise durch den Prüfraum geleitet, dort kann es die aus der Probe austretenden flüchtigen Substanzen und/oder den Dämpfe aufnehmen und wird anschliessend über die Absaugvorrichtung aus dem Prüfraum entfernt. Selbstverständlich kann das gasförmige Medium auch mit Überdruck durch den Prüfraum geleitet werden.

Die Absaugvorrichtung ist nicht auf aktive Systeme, beispielsweise eine Ableitungsöffnung mit einem Ventilator oder einer Vakuumpumpe limitiert. Sofern von aussen unter Überdruck über eine Gaszufuhrvorrichtung ein gasförmiges Medium in den Prüfraum eingeleitet wird, stellt diese Gaszufuhrvorrichtung und die Ableitungsöffnung zur Entfernung der Gase aus dem Prüfraum ebenfalls eine Absaugvorrichtung dar.

Die Wägeresultate der Wägevorrichtung können durch die Emissionen der Strahlungsquellen stark beeinflusst werden. Zur thermischen Isolation wird die Wand des Prüfraumes zumindest zwischen dem Prüfraum und der Wägevorrichtung vorzugsweise doppelwandig ausgebildet, um das von ausserhalb des Messgerätes angesaugte gasförmiges Medium, vorzugsweise Luft, in der doppelwandigen Wand zu führen. Das gasförmige Medium kann selbstverständlich auch durch Überdruck in das Messgerät eingeleitetet werden. Im Prüfraum beziehungsweise in der doppelwandigen Wand kann zusätzlich noch ein Mittel zur Eliminierung elektrostatischer Ladungen der Probe, beispielsweise ein lonisator angeordnet sein, um statische Ladungen im Prüfraum zu eliminieren.

Vorzugsweise ist das gasförmige Medium chemisch stabil und reaktionsträge gegenüber der Probe und den Materialien des Prüfraums. Solche gasförmigen Medien können beispielsweise Schutzgase wie Stickstoff und Edelgase wie Argon sein.

In speziellen Fällen kann aber auch ein mit den austretenden dampf- oder gasförmigen Substanzen reagierendes gasförmiges Medium verwendet werden, um einer Wiederaufnahme der Substanzen durch die Probe entgegenzuwirken. Im Falle von Wasserdampf könnten beispielsweise verschiedene Halogene eingesetzt werden.

Für besondere Anwendungen ist es von Vorteil, wenn das gasförmige Medium einen vordefinierten Feuchtigkeitsgehalt aufweist. Dadurch kann die Reproduzierbarkeit von Vergleichsmessungen verbessert werden.

Sowohl eine aktiv verursachte Durchströmung des Prüfraumes mittels einer Absaugvorrichtung als auch eine durch rein thermische Effekte verursachte Strömung im Prüfraum wirkt sich auf das Wägeergebnis aus. Das von unten nach oben aufsteigende gasförmige Medium im Prüfraum greift an der Unterseite der Probeaufnahme an und verringert dadurch den Wägewert der Probe. Der Auftrieb der Probe verringert sich wiederum mit zunehmender Temperatur. Solche Effekte können elektronisch kompensiert werden, indem vor der eigentlichen Messung ein Kompensationswert mit einer Dummy-Probe ermittelt wird.

Vorzugsweise verfügt das Messgerät über eine Kalibriervorrichtung, die der bedarfsgesteuerten oder automatischen Kalibrierung der Wägevorrichtung dient.

Die Kalibriervorrichtung kann ein Kalibriergewicht oder mehrere Kalibriergewichte aufweisen. In einer besonders bevorzugten Ausführung liegt der Massenschwerpunkt des einen oder der mehreren Kalibriergewichte während eines Kalibrierungsvorganges auf oder nahe einer, in Lastrichtung verlaufenden Schwerpunktachse der Probeaufnahme und/oder der Probe. Dadurch können Eckenlastfehler im durch den Kalibriervorgang ermittelten Korrekturfaktor vermieden werden.

Mit den oben beschriebenen Ausführungen des Messgerätes können eine Vielzahl von verschiedenen Verfahren durchgeführt werden. Eines dieser Verfahren zur Bestimmung des Feuchtigkeitsgehalts einer Probe durch Messung des Gewichtsverlustes während einer vorbestimmten Prüfdauer und einem festgelegten Temperaturprofil weist im Wesentlichen die folgenden Schritte auf:
- konditionieren des Prüfraumes auf eine vorgegebene Temperatur mittels mindestens einer der Strahlungsquellen,
- öffnen des Prüfraums, einbringen der Probe in den Prüfraum und schliessen des Prüfraums,
- ermitteln des Probengewichts in vorbestimmten Zeit-Intervallen, beispielsweise beim Prüfbeginn und beim Prüfende, und/oder kontinuierliches erfassen der Gewichtsabnahme über die gesamte Prüfdauer,
- entfernen der Probe, Auswertung des Messergebnisses und/oder Übermittlung des Messergebnisses an eine Anzeigeeinheit.

Durch die Konditionierung des Prüfraumes vor Beginn der eigentlichen Messung können gleich bleibende Prüfraumbedingungen erwirkt werden, was sich auf die Reproduzierbarkeit der Messresultate sehr positiv auswirkt. Die Reproduzierbarkeit von Resultaten ist eine wichtige Eigenschaft eines Messgerätes zur gravimetrischen Feuchtigkeitsbestimmung. Nur so können die Resultate miteinander verglichen werden. Bei Stichprobenprüfungen von zu verarbeitenden Stoffen wie beispielsweise Kunststoffgranulat werden die Messergebnisse mit Erfahrungswerten verglichen. Anhand der Messresultate und der Vergleichswerte wird die Vorbehandlung der Stoffe beziehungsweise werden die Einstelldaten der Verarbeitungsmaschinen festgelegt.

Sofern das Messgerät über eine Aufbereitungsvorrichtung für das gasförmige Medium verfügt, ermöglicht dieses Messgerät die Durchführung eines weiteren Verfahrens. Dieses Verfahren dient der Bestimmung der Feuchtigkeitsaffinität einer Probe durch Messung der Gewichtszunahme während einer vorbestimmten Prüfdauer und einem festgelegten Temperaturprofil. Dadurch kann beispielsweise die Lagerhaltung von zu verarbeitenden Stoffen simuliert werden. Diese Daten ermöglichen eine schrittweise oder kontinuierliche Anpassung der Verarbeitungsmaschinen an den sich verändernden Zustand der Stoffe. Das Verfahren zur Bestimmung der Feuchtigkeitsaffinität weist im Wesentlichen die folgenden Schritte auf:
- öffnen des Prüfraums, einbringen der Probe in den Prüfraum und schliessen des Prüfraums,
- konditionieren der Probe auf einen vorbestimmten Feuchtigkeitsgehalt,
- einstellen des Prüfraumes auf eine vorgegebene Temperatur mittels mindestens einer der Strahlungsquellen,
- einbringen eines gasförmigen Mediums in den Prüfraum mit einem bekannten Feuchtigkeitsgehalt bei vordefiniertem Volumenstrom und vordefiniertem Temperaturprofil zumindest während der Prüfdauer,
- ermitteln des Probengewichts beim Prüfbeginn und beim Prüfende und/oder kontinuierliches Erfassen der Gewichtszunahme über die gesamte Prüfdauer,
- entfernen der Probe, Auswertung des Messergebnisses und/oder Übermittlung des Messergebnisses an eine Anzeigeeinheit.

In den vorangehenden Verfahren wurde jeweils der Prüfraum konditioniert. Während dieser Konditionierungsphase kann gegebenenfalls auch der Auftriebs- und Strömungsfehlerabgleich vorgenommen werden.

Das Verfahren zur elektronischen Korrektur eines Auftriebs- oder Strömungsfehlers in den erfassten Messwerten beinhaltet im Wesentlichen die folgenden Schritte:
a. einbringen eines Referenzkörpers in den Proberaum, beispielsweise einer leeren, zur Aufnahme der Probe vorgesehenen Probeschale,
b. ermitteln des Gewichtsgrundwertes des Referenzkörpers,
c. ermitteln der Korrekturgewichtswerte des Referenzkörpers in vorgegebenen Messintervallen und/oder kontinuierliches Erfassen der Gewichtsveränderung über die gesamte Prüfdauer,
d. bilden der Korrekturwerte oder des Korrekturprofils über die ganze Prüfdauer durch Subtraktion des Gewichtsgrundwertes von den Korrekturgewichtswerten,
e. einspeichern dieser Werte oder des Korrekturprofils in ein Speichermodul,
f. Entnahme des Referenzkörpers,
g. durchführen der Probenmessungen unter Berücksichtigung der ermittelten Korrekturwerte.

Sämtliche Werte werden dabei mittels der Wägezelle erfasst. Das Speichermodul ist Teil eines Elektronikmoduls, wobei das Elektronikmodul als ein Modul oder als mehrere miteinander verbundene Module ausgestaltet sei kann. Das Elektronikmodul übernimmt verschiedene Aufgaben wie beispielsweise:
- die Erfassung und Verarbeitung der Messwerte der Wägevorrichtung,
- die Speicherung von Eingabedaten des Benutzers, beispielsweise probenspezifischer Daten
- die Regelung und Steuerung der Strahlungsquellen,
- sofern vorhanden die Regelung und Steuerung der Abzugsvorrichtung,
- die Kompensation von Umgebungseinflüssen auf die Messvorrichtung,
- die Auswertung und Speicherung der Messergebnisse,
- die Übermittlung der Messergebnisse an eine Anzeigeeinheit,
- das Datenmanagement
- die Verarbeitung von in einer Speichereinheit abgelegten Programmen und Prüfprozeduren

Einzelheiten der erfindungsgemässen Messvorrichtung ergeben sich anhand der Beschreibung der in den Zeichnungen dargestellten Ausführungsbeispiele. Es zeigen:

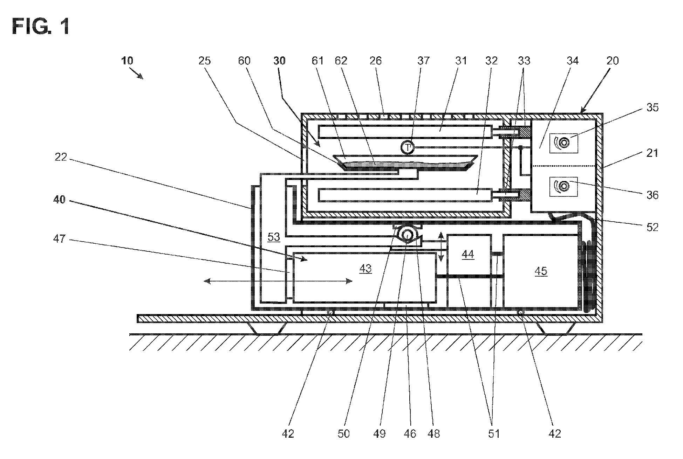

- Fig. 1: die Darstellung einer Messvorrichtung im Schnitt einer ersten Ausführung mit einem Gehäuse, mit einer Wägevorrichtung welche auf einem horizontal verfahrbaren beweglichen Gehäuseteil angeordnet ist und einem oberhalb der Wägevorrichtung angeordneten Prüfraum, wobei der Prüfraum mit einer ersten und einer zweiten Strahlungsquelle versehen ist;

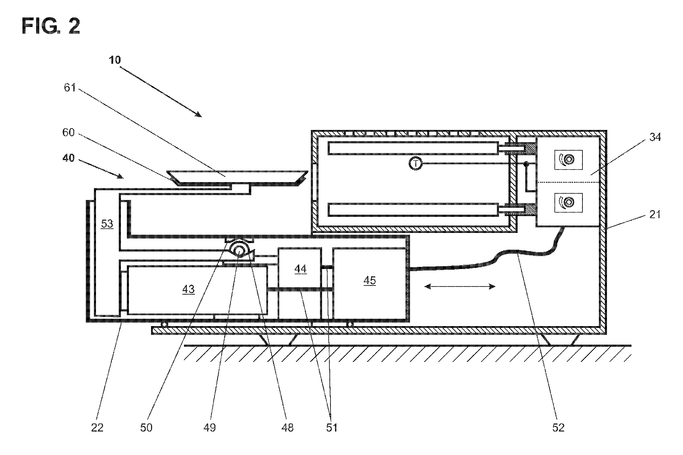

- Fig. 2: die Messvorrichtung aus Figur 1 mit ausgefahrener Wägevorrichtung;

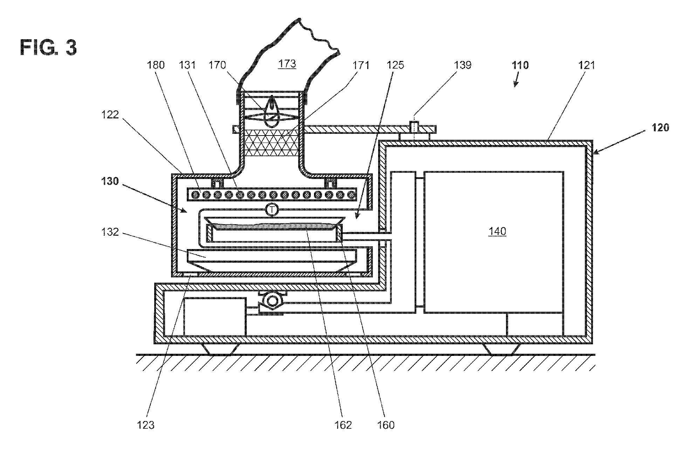

- Fig. 3: die Darstellung einer Messvorrichtung im Schnitt in einer zweiten Ausführung mit einer um eine vertikale Schwenkachse verschwenkbaren Einheit aus einer ersten und einer zweiten Strahlungsquelle, wobei die verschwenkbare Einheit und die Wägevorrichtung nebeneinander angeordnet sind und in der verschwenkbaren Einheit eine Absaugvorrichtung und Luftschlitze integriert sind;

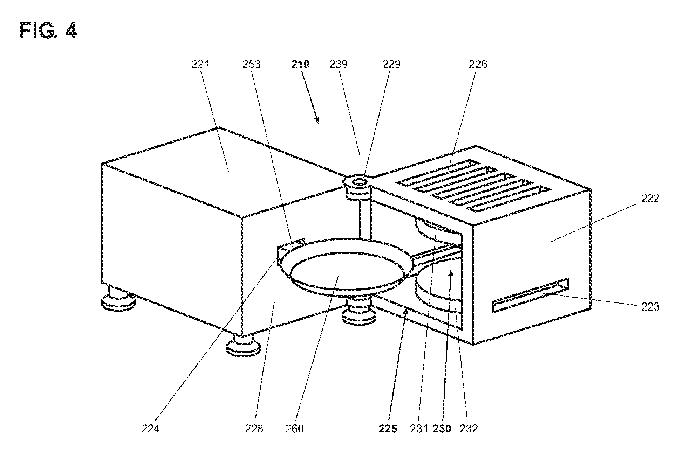

- Fig. 4: die dreidimensionale Darstellung einer Messvorrichtung in einer dritten Ausführung im geöffneten Zustand mit einer um eine vertikale Schwenkachse verschwenkbaren Einheit aus erster und zweiter Strahlungsquelle, wobei die verschwenkbare Einheit und die Wägevorrichtung nebeneinander angeordnet sind;

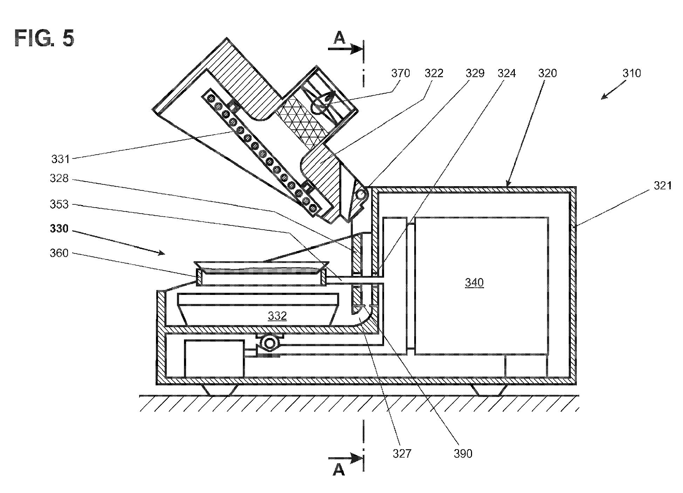

- Fig. 5: die Darstellung einer Messvorrichtung im Schnitt in einer vierten Ausführung mit einem Gehäuse, in welcher der Prüfraum und die Wägevorrichtung nebeneinander angeordnet sind und einem die erste Strahlungsquelle tragenden Deckel, welcher um eine im Wesentlichen horizontale Schwenkachse am Gehäuse schwenkbar gelagert ist, eine im Deckel integrierte Absaugvorrichtung und einem isolierenden Belüftungskanal welcher zwischen der Wägevorrichtung und dem Prüfraum angeordnet ist und wobei die zweite Strahlungsquelle mit dem Gehäuse fest verbunden ist;

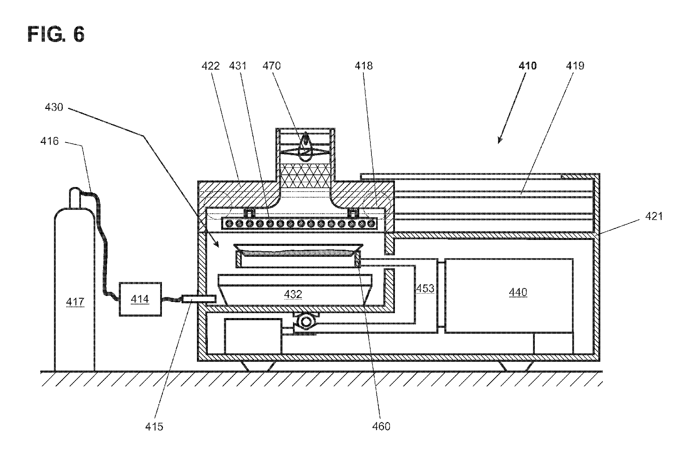

- Fig. 6: die Darstellung einer Messvorrichtung im Schnitt in einer fünften Ausführung mit einem Gehäuse, in welchem der Prüfraum und die Wägevorrichtung nebeneinander angeordnet sind und einem die erste Strahlungsquelle tragenden Deckel mit einer integrierten Absaugvorrichtung, welcher horizontal verschiebbar ausgebildet ist, sowie mit einem Prüfraum mit Gasanschluss.

In Figur 1 ist eine Messvorrichtung 10 einer ersten Ausführung im Schnitt dargestellt. Die Messvorrichtung 10 weist ein Gehäuse 20 auf, in welchem ein Prüfraum 30 angeordnet ist. Das Gehäuse 20 ist in einen bewegbaren Gehäuseteil 22 und in einen feststehenden Gehäuseteil 21 unterteilt. Unterhalb des Prüfraumes 30 ist eine Wägevorrichtung 40 auf dem im Wesentlichen horizontal verfahrbaren bewegbaren Gehäuseteil 22 angeordnet. Der bewegbare Gehäuseteil 22 ist im feststehenden Gehäuse 21 mittels Rollen 42 geführt, wobei die Führung nur schematisch dargestellt ist. Selbstverständlich können auch handelsübliche Führungen wie Doppelauszugsschienen und dergleichen verwendet werden. Im als Hohlkörper ausgestalteten bewegbaren Gehäuseteil 22 sind eine Wägezelle 43, ein Kalibriergewichtauflegemechanismus 44 und mindestens ein Elektronikmodul 45 angeordnet und durch Übertragungsmittel 51 miteinander verbunden. Das Elektronikmodul 45 enthält mindestens ein nicht näher dargestelltes Signalverarbeitungsmodul, gegebenenfalls auch ein Steuerungs- und/oder Regelungsmodul. Die Wägezelle 43 weist mindestens einen feststehenden Bereich 46 und einen Lastaufnahmebereich 47 auf. Bekannte Wägezellentypen sind beispielsweise mit Dehnungsmessstreifen bestückte elastische Verformungskörper, Wägezellen die nach dem Prinzip der elektromagnetischen Kraftkompensation arbeiten, Wägezellen mit Schwingsaiten, kapazitive Wägesensoren und dergleichen. Der feststehende Bereich 46 ist mit dem bewegbaren Gehäuseteil 22 fest verbunden und am Lastaufnahmebereich 47 ist ein Verbindungsglied 53 angeordnet, welches eine Probeaufnahme 60 mit dem Lastaufnahmebereich 47 verbindet. Auf die Probeaufnahme 60 kann wie dargestellt eine Probeschale 61 mit einer Probe 62 aufgelegt werden. Sofern es die Ausgestaltung der Probeaufnahme 60 erlaubt, kann selbstverständlich die Probe 62 auch direkt auf die Probeaufnahme 60 aufgebracht werden.

Ferner ist am Verbindungsglied 53 eine Kalibriergewichtauflage 48 ausgebildet. Auf diese Kalibriergewichtauflage 48 kann vom Benutzer oder durch die Steuerung der Messvorrichtung 10 ausgelöst, mittels dem Kalibriergewichtauflegemechanismus 44 ein Kalibriergewicht 49 aufgelegt werden, um einen Korrekturwert für das Messsignal in Abhängigkeit des momentanen Betriebszustandes der Messvorrichtung 10 zu ermitteln. Nach der Ermittlung des Korrekturwertes wird das Kalibriergewicht 49 wieder von der Kalibriergewichtauflage 48 entkoppelt und durch den Kalibriergewichtauflegemechanismus 44 bis zum nächsten Kalibriervorgang gegen einen Anschlag 50 gepresst. Um Eckenlastfehler im Korrekturwert zu vermeiden, liegt idealerweise der Massenschwerpunkt des Kalibriergewichts (49) beziehungsweise der gemeinsame Massenschwerpunkt mehrerer Kalibriergewichte (49) nahe der Schwerpunktachse der Probeaufnahme (60) beziehungsweise der Probeschale (61), beziehungsweise der Probe (62). Unter Eckenlastfehler wird die Abweichung im Messwert einer Wägevorrichtung bezeichnet, welche dieselbe Last bei deren exzentrischen Anordnung gegenüber deren zentrischen Anordnung auf der Probeaufnahme (60) verursacht.

Wie in Figur 1 dargestellt, befindet sich die Wägevorrichtung 40 in Messstellung; das heisst, dass sich die Probeaufnahme 60 mit der aufgelegten Probeschale 61 im Prüfraum 30 befindet. Im Prüfraum 30 ist eine erste Strahlungsquelle 31 im Wesentlichen parallel zur flächigen Ausdehnung der Probeaufnahme 60 angeordnet, um eine möglichst homogene Wärmeverteilung zumindest an der Oberfläche der Probe 62 zu erreichen. Unterhalb der Probeaufnahme 60 ist im Prüfraum 30 eine zweite Strahlungsquelle 32 im Wesentlichen parallel zur Probeaufnahme 60 angeordnet, deren Strahlung von unten auf die Probe 62 einwirkt. Eine in ihrer flächigen Ausdehnung parallele Anordnung der Strahlungsquellen 31, 32 zur Probeaufnahme 60 ist aber nicht zwingend erforderlich. Je nach der Probe 62 und der durchzuführenden Messung kann auch eine schräg zur Probeaufnahme 60 angeordnete erste Strahlungsquelle 31 und /oder zweite Strahlungsquelle 32 von Vorteil sein. Durch die zweiseitige Einwirkung der Strahlung von unten und von oben wird eine homogenere Wärmeverteilung in der Probe 62 erreicht. Dadurch treten in der Probe 62 im Vergleich zu einer nur von einer Seite beaufschlagten Probe 62 lokal weniger Temperaturspitzen auf, die dazu führen können, dass sich die Probe 62 an diesen Stellen thermisch zersetzt. Sofern die Probe 62, beispielsweise ein Kunststoff, einen relativ tiefen Schmelzpunkt aufweist, kann die Oberfläche der Probe 62 bei einer inhomogenen Erwärmung stellenweise anschmelzen und den Austritt der Feuchtigkeit aus der Probe 62 hemmen. Dies kann bei der Anwendung eines Berechnungsverfahrens, in welchem zeitabhängige Parameter verwendet werden, zu massiven Fehlern im berechneten Ergebnis führen.

Damit die von der Probe 62 abgegebene Feuchtigkeit aus dem Prüfraum 30 entweichen kann, sind im Gehäuse 20 an geeigneter Stelle, vorzugsweise oberhalb der ersten Strahlungsquelle 31, Abzugsöffnungen 26 angeordnet. Um eine ausreichende Luftzirkulation innerhalb des Prüfraumes 30 zu erzeugen, sind ferner an geeigneter Stelle, vorzugsweise unterhalb der zweiten Strahlungsquelle 32, Belüftungsöffnungen vorzusehen. Zweckmässigerweise dient die Beschickungsöffnung 25 gleichzeitig der Belüftung des Prüfraumes 30, so dass wie in Figur 1 dargestellt, auf zusätzliche Belüftungsöffnungen verzichtet werden kann.

Idealerweise sind die Strahlungsquellen 31, 32 über Steckverbindungen 33 lösbar mechanisch mit dem Gehäuse 20 und elektrisch mit einer Spannungsquelle 34 verbunden. Dadurch können die Strahlungsquellen 31, 32 zur Reinigung oder Reparatur ohne grossen Aufwand aus dem Prüfraum 30 ausgebaut werden. Ferner kann durch die Verwendung von Steckverbindungen 33 der Anwender der Messvorrichtung 10 verschiedene, in ihrer Funktionsweise unterschiedliche Strahlungsquellen 31, 32 miteinander kombinieren. Dadurch ist der Anwender in der Lage, auf die Probe 62 abgestimmte Prüfraumbedingungen zu schaffen. Die Spannungsquelle 34 in Figur 1 weist eine erste Steuer-/Regelvorrichtung 35 zur Beeinflussung der Emissionen der ersten Strahlungsquelle 31 und eine zweite Steuer-/Regelvorrichtung 36 zur Beeinflussung der Emissionen der zweiten Strahlungsquelle 32 auf. Ein schematisch dargestellter Temperatursensor 37 erfasst die Temperatur der Probe 62 und liefert die zur Regelung der Strahlungsquellen 31, 32 notwendigen Informationen an die erste und zweite Steuer-/Regelvorrichtung 35, 36. Die Spannungsquelle ist zudem mit der Wägevorrichtung 40 beziehungsweise mit dem Elektronikmodul 45 über mindestens eine flexible Verbindung 52 verbunden. Dadurch können mittels dem Elektronikmodul 45 die Steuer-/Regelvorrichtungen 35, 36 angesteuert werden.

In Figur 2 ist die Messvorrichtung 10 aus Figur 1 mit ausgefahrener Wägevorrichtung 40 dargestellt. Die Wägevorrichtung 40 umfasst im Wesentlichen den bewegbaren Gehäuseteil 22, die Wägezelle 43, das Verbindungsglied 53, die Probeaufnahme 60, den Kalibrierauflegemechanismus 44, das Kalibriergewicht 49, den Anschlag 50, das Elektronikmodul 45 sowie die Übertragungsmittel 51. Wie aus der Figur 2 ersichtlich ist, muss die flexible Verbindung 52 zwischen der Spannungsquelle 34 und dem Elektronikmodul 45 flexibel sein, so dass die Wägevorrichtung 40 aus dem feststehenden Gehäuseteil 21 herausgezogen werden kann um die Aufbringung einer Probeschale 61 und/oder einer Probe auf die Probeaufnahme 60 beziehungsweise die Entnahme der Probeschale 61 und/oder der Probe zu erleichtern. Wie die Figur 2 zeigt, ist das Kalibriergewicht 49 auf der Kalibriergewichtauflage 48 aufgelegt, das heisst, dass durch das Elektronikmodul 45 der Wägevorrichtung 40 ein Korrekturwert ermittelt wird.

In Figur 3 wird eine zweite, im Schnitt dargestellte Ausführungsvariante der erfindungsgemässen Messvorrichtung 110 gezeigt. Eine im Gehäuse 120 angeordnete Wägevorrichtung 140 weist im Wesentlichen dieselben Elemente auf, welche vorangehend in der Beschreibung von Figur 1 bezüglich der Wägevorrichtung 40 aufgeführt wurden. Das Gehäuse 120 ist in einen feststehenden Gehäuseteil 121 und in einen bewegbaren Gehäuseteil 122 unterteilt.

Anders als in Figur 1 ist die Wägevorrichtung 140 nicht in einem horizontal bewegbaren Gehäuseteil, sondern im feststehenden Gehäuseteil 121 angeordnet. Die Wägevorrichtung 140 ist vom feststehenden Gehäuseteil 121 weitgehend umschlossen. Einzig eine mit der Wägevorrichtung 140 verbundene Probeaufnahme 160 ragt aus dem feststehenden Gehäuseteil 121 heraus und in den Bereich des bewegbaren Gehäuseteils 122 hinein, wenn der bewegbare Gehäuseteil 122 sich in der Messstellung befindet. Auf dieser ringförmig ausgestalteten Probeaufnahme 160 lassen sich verschieden ausgestaltete Behältnisse wie Probeschalen 162, Tiegel und dergleichen mehr auflegen.

Der bewegbare Gehäuseteil 122 bildet die Aussenhülle einer Einheit, welche um eine vertikale Schwenkachse 139 verschwenkbar mit dem feststehenden Gehäuseteil 121 verbunden ist. Ein Prüfraum 130 ist im Innern des bewegbaren Gehäuseteils 122 ausgebildet, wobei im oberen Bereich des Prüfraumes 130 eine erste Strahlungsquelle 131 und im unteren Bereich des Prüfraumes 130 eine zweite Strahlungsquelle 132 angeordnet ist. Ferner weist der bewegbare Gehäuseteil 122 eine Beschickungsöffnung 125 auf, welche so ausgebildet ist, dass die Probeaufnahme 160 mit aufgelegter Probe 162 beim Verschwenken der Einheit das bewegbare Gehäuseteil 122 nicht berührt. Wie in Figur 3 dargestellt, umgibt in Messstellung der Prüfraum 130 die Probeaufnahme 160, wobei die erste Strahlungsquelle 131 oberhalb der Probeaufnahme 160 und die zweite Strahlungsquelle 132 unterhalb der Probeaufnahme 160 angeordnet ist.

Die erste Strahlungsquelle 131 ist mittels mehrerer Öffnungen 180 gitterförmig ausgebildet, so dass sich die aus einer Probe 162 entweichenden Dämpfe und/oder flüchtigen Substanzen über diese Öffnungen 180 besser aus der Umgebung der Probe 162 entfernen lassen. Oberhalb der ersten Strahlungsquelle 131 ist im beweglichen Gehäuseteil 121 eine Absaugvorrichtung 170 eingelassen. Diese erzeugt im Prüfraum 130 einen Unterdruck, so dass über Belüftungsöffnungen 123 des beweglichen Gehäuseteils 121, beispielsweise die die Messvorrichtung 110 umgebende Luft in den Prüfraum 130 angesaugt wird. Die angesaugte Luft wird im Prüfraum 130 durch die Strahlungsquellen 131, 132 erwärmt, nimmt die aus der Probe 162 entweichende Feuchtigkeit auf und verlässt über die Absaugvorrichtung 170 den Prüfraum 130. Die Durchflussgeschwindigkeit des angesaugten, gasförmigen Mediums, welches die aus der Probe 162 ausgetriebene Feuchtigkeit aufnimmt, kann über die Saugleistung der Absaugvorrichtung 170 gesteuert werden. Zur Behandlung flüchtiger Substanzen welche beispielsweise starken Eigengeruch haben, toxisch oder ätzend sind, kann der Absaugkanal der Absaugvorrichtung 170 wie in Figur 3 dargestellt, zusätzlich mit einem Filter 171 beispielsweise einer Gewebeeinlage, einem Adsorptionsfilter und/oder einem Kondensator ausgerüstet sein. Je nach vorhandener Infrastruktur kann das gasförmige Medium mit der aufgenommenen Feuchtigkeit über einen an die Absaugvorrichtung 170 anschliessenden Schlauch 173 beispielsweise in die Lüftungsvorrichtung einer Hausinstallation eingeleitet werden.

Figur 4 zeigt die dreidimensionale Darstellung einer Messvorrichtung 210 im geöffneten Zustand. Diese dritte Ausführung stellt eine Variante der in Figur 3 beschriebenen Messvorrichtung 110 dar. Die Wägevorrichtung ist innerhalb eines feststehenden Gehäuseteils 221 angeordnet, und wird durch dieses Gehäuseteil 221 verdeckt. Das feststehende Gehäuseteil 221 weist an mindestens einer Wand 228 eine Durchführung 224 auf, durch welche ein Verbindungsglied 253 der Wägevorrichtung hindurchreicht. Mit dem Verbindungsglied 253 ist eine Probeaufnahme 260 fest verbunden, welche in Figur 4 als Waagschale ausgebildet und ohne aufgelegte Probe dargestellt ist.

Im Randbereich der Wand 228 ist ein Scharnier 229 ausgebildet, über welches ein bewegbares Gehäuseteil 222 mit dem feststehenden Gehäuseteil 221 verbunden ist. Das Scharnier 229 weist eine parallel zur Lastrichtung angeordnete, senkrechte Schwenkachse 239 auf. Das Scharnier 229 muss nicht zwingend an der dargestellten Stelle die Gehäuseteile 222, 221 miteinander verbinden, es kann am gegenüberliegenden, aber auch im oberen Randbereich der Wand 228 angeordnet sein, wobei bei der Anordnung im oberen Randbereich die Schwenkachse 239 eine horizontale Ausrichtung aufweist.

Das bewegbare Gehäuseteil 222 verfügt über eine Beschickungsöffnung 225, welche in Messstellung des Messgerätes 210 durch die Wand 228 verschlossen wird. Damit bilden die Wände des beweglichen Gehäuseteils 222 und die Wand 228 des feststehenden Teils einen Prüfraum 230, der in Figur 4 geöffnet dargestellt ist und so den freien Zugang zur Probeaufnahme 260 ermöglicht. Im beweglichen Gehäuseteil 222 sind eine erste Strahlungsquelle 231 und eine zweite Strahlungsquelle 232 derart angeordnet, dass in Messstellung die erste Strahlungsquelle 231 oberhalb und die zweite Strahlungsquelle 232 unterhalb der Probeaufnahme 260 angeordnet sind. Ferner weist das bewegliche Gehäuseteil 222 in den Seitenwänden Belüftungsöffnungen 223 und oberhalb der ersten Strahlungsquelle 231 Abzugsöffnungen 226 auf.

In Figur 5 wird eine vierte, im Schnitt dargestellte Ausführungsvariante der erfindungsgemässen Messvorrichtung 310 gezeigt. Eine im Gehäuse 320 angeordnete Wägevorrichtung 340 weist im Wesentlichen dieselben Elemente auf, welche vorangehend in der Beschreibung von Figur 1 bezüglich der Wägevorrichtung 40 aufgeführt wurden. Das Gehäuse 320 ist in einen feststehenden Gehäuseteil 321 und in einen bewegbaren Gehäuseteil 322 unterteilt. Das bewegbare Gehäuseteil 322 ist als Deckel ausgestaltet, in welchem eine erste Strahlungsquelle 331 angeordnet ist. Wie in Figur 3 beschrieben, ist oberhalb der ersten Strahlungsquelle 331 eine Absaugvorrichtung 370 im beweglichen Gehäuseteil 322 integriert. Dieses bewegliche Gehäuseteil 322 ist über ein Scharnier 329 im oberen Bereich des Gehäuses 320 mit dem feststehenden Gehäuseteil 321 verbunden, wobei die Schwenkachse des Scharniers 329 im Wesentlichen horizontal angeordnet ist. Das bewegbare Gehäuseteil 322 bildet den oberen Teil eines Prüfraumes 330.

Der untere Teil des Prüfraumes 330 ist im feststehenden Gehäuseteil 321 ausgebildet. Darin angeordnet ist eine zweite Strahlungsquelle 332. Das mit der Wägevorrichtung 340 mechanisch verbundene Verbindungsglied 353 ragt ebenfalls in den unteren Teil des Prüfraums 330 hinein, so dass eine mit dem Verbindungsglied 353 verbundene Probeaufnahme 360 oberhalb der zweiten Strahlungsquelle 332 angeordnet ist. Zur thermischen Isolation ist eine Wand 328 des feststehenden Gehäuses 321 zwischen der Wägevorrichtung 340 und dem Prüfraum 330 zumindest teilweise doppelwandig ausgestaltet. Wie in Figur 5 dargestellt, wird durch die doppelwandige Ausgestaltung ein Belüftungskanal 327 gebildet, durch den ein gasförmiges Medium in den Prüfraum 330 geleitet werden kann. Das während des Messvorganges durchströmende Medium kühlt dabei die Wand 328, so dass die vom Prüfraum 330 ausstrahlende Wärme nicht in den Gehäusebereich der Wägevorrichtung 340 vordringen kann.

Im Belüftungskanal 327 können ferner verschiedene Hilfseinrichtungen angeordnet werden. So kann mittels eines lonisators 390 das gasförmige Medium ionisiert werden, um elektrostatische Ladungen der Probe zu eliminieren. Wie bei den vorangehenden Ausführungsbeispielen hat auch die Wand 328 eine Durchführung 324. Diese kann durchgehend geschlossen ausgestaltet sein, so dass kein durch den Belüftungskanal 327 strömendes Medium über die Durchführung 324 in den Proberaum 330 gelangt.

In Figur 6 wird eine fünfte, im Schnitt dargestellte Ausführungsvariante der erfindungsgemässen Messvorrichtung 410 gezeigt. Das feststehende Gehäuseteil 421 und die darin angeordneten Elemente wie eine Wägevorrichtung 440, eine Probeaufnahme 460, ein Verbindungsglied 453 sowie eine zweite Strahlungsquelle 432 entsprechen im Wesentlichen den Elementen, welche vorangehend in der Beschreibung von Figur 5 aufgeführt wurden. Auch das bewegliche Gehäuseteil 422 mit den darin angeordneten Elementen wie eine erste Strahlungsquelle 431 und eine Absaugvorrichtung 470 entspricht im Wesentlichen den Elementen, welche vorangehend in der Beschreibung von Figur 5 aufgeführt wurden. Das bewegliche Gehäuseteil 422 wird aber nicht wie in Figur 5 über ein Scharnier mit dem feststehenden Gehäuseteil 421 verbunden, sondern ist mittels Führungsrollen 418 und Führungsschienen 419 im feststehenden Gehäuseteil 421 linear verschiebbar geführt. An Stelle des Belüftungskanals 327 verfügt der Prüfraum 430 über einen Anschluss 415, der über einen flexiblen Schlauch 416 mit einem Druckbehälter 417 oder einer Hausanlage verbunden ist. In diesem Druckbehälter 417 ist ein gasförmiges Medium gespeichert, welches vorzugsweise mittels einer Aufbereitungsvorrichtung 414 aufbereitet, beim einströmen in den Prüfraum 330 einen definierten, gleich bleibenden Feuchtigkeitsgehalt aufweist. Da das gasförmige Medium unter Überdruck in den Prüfraum 430 einströmt, kann die Absaugvorrichtung 470 auch durch Abzugsöffnungen ersetzt werden.

Die vorgestellten Ausführungsformen zeigen Messgeräte zur gravimetrischen Feuchtigkeitsbestimmung mit unterschiedlichen Eigenschaften und Merkmalen. Die verschiedenen Eigenschaften und Merkmale wurden zur besseren Übersicht in verschiedenen Ausführungsbeispielen dargestellt, wobei es auch möglich ist, einzelne, mehrere oder alle aufgezeigten Merkmale und Eigenschaften in einem Messgerät zu realisieren.

### Bezugszeichenliste

- 410, 310, 210, 110, 10: Messvorrichtung
- 320, 120, 20: Gehäuse
- 421, 321, 221, 121, 21: feststehendes Gehäuseteil
- 422, 322, 222, 122, 22: bewegbares Gehäuseteil
- 225, 125, 25: Beschickungsöffnung
- 226,26: Abzugsöffnung
- 430, 330, 230, 130, 30: Prüfraum
- 431, 331, 231, 131, 31: erste Strahlungsquelle
- 432, 332, 232, 132, 32: zweite Strahlungsquelle
- 33: Steckverbindung
- 34: Spannungsquelle
- 35: erste Steuer-/Regelvorrichtung
- 36: zweite Steuer-/Regelvorrichtung
- 37: Temperatursensor
- 440, 340, 140, 40: Wägevorrichtung
- 42: Rolle
- 43: Wägezelle
- 44: Kalibrierauflegemechanismus
- 45: Elektronikmodul
- 46: feststehender Bereich
- 47: Lastaufnahmebereich
- 48: Kalibriergewichtauflage
- 49: Kalibriergewicht
- 50: Anschlag
- 51: Übertragungsmittel
- 52: flexible Verbindung
- 453, 353, 253, 53: Verbindungsglied
- 460, 360, 160, 60: Probeaufnahme
- 61: Probeschale
- 162, 62: Probe
- 223, 123: Belüftungsöffnung
- 239, 139: Schwenkachse
- 470, 370, 170: Absaugvorrichtung
- 171: Filter
- 173: flexibler Schlauch
- 180: Öffnung
- 324, 224: Durchführung
- 328,228: Wand
- 329, 229: Scharnier
- 327: Belüftungskanal
- 390: lonisator
- 414: Aufbereitungsvorrichtung
- 415: Anschluss
- 416: flexibler Schlauch
- 417: Druckbehälter
- 418: Führungsrolle
- 419: Führungsschiene

## Patentansprüche

1. Messgerät (10, 110, 210...) zur gravimetrischen Feuchtigkeitsbestimmung mit einem Gehäuse (20), einem im Gehäuse (20) angeordneten Prüfraum (30) und einer im Gehäuse (20) eingebauten Wägevorrichtung (40), wobei die Wägevorrichtung (40) einen Lastaufnahmebereich (47) und eine mit diesem Lastaufnahmebereich (47) verbindbare Probeaufnahme (60) aufweist und die Probeaufnahme (60) in Messstellung innerhalb des Prüfraumes (30) angeordnet ist, sowie mit einem im Prüfraum (30) angeordneten Mittel zur Erwärmung einer auf der Probeaufnahme (60) aufzulegenden Probe (62), **dadurch gekennzeichnet, dass** das Mittel zur Erwärmung der Probe (62) eine erste Strahlungsquelle (31) und eine zweite Strahlungsquelle (32) aufweist, wobei die Probeaufnahme (60) zwischen der ersten Strahlungsquelle (31) und der zweiten Strahlungsquelle (32) angeordnet ist.

2. Messgerät (10, 110, 210,...) nach Anspruch 1, **dadurch gekennzeichnet, dass** die Probeaufnahme (60) in Messstellung in ihrer flächigen Ausdehnung in einer Ebene im Wesentlichen orthogonal zur Lastrichtung angeordnet ist, und dass die erste Strahlungsquelle (31) und die zweite Strahlungsquelle (32) in ihrer flächigen Ausdehnung parallel zur Probeaufnahme (60) angeordnet sind.

3. Messgerät (310) nach Anspruch 1 oder 2, **dadurch gekennzeichnet, dass** die Wägevorrichtung (340) und der Prüfraum (330) nebeneinander im Gehäuse (320) angeordnet sind, wobei mindestens eine, vorzugsweise der Wägevorrichtung (340) zugewandte Wand (328) des Prüfraumes (330) mindestens eine Durchführung (324) aufweist, durch die ein Verbindungsglied (353) hindurchreicht, mit welchem die Wägevorrichtung (340) mit der im Prüfraum (330) angeordneten Probeaufnahme (360) verbindbar ist.

4. Messgerät (10, 110, 210...) nach einem der Ansprüche 1 bis 3, **dadurch gekennzeichnet, dass** die Emissionen der ersten Strahlungsquelle (31) und die Emissionen der zweiten Strahlungsquelle (32) unabhängig voneinander mittels einer Steuer- und/oder Regelelektronik (35, 36) steuerbar und/oder regelbar sind.

5. Messgerät (10, 110, 210...) nach einem der Ansprüche 1 bis 4, **dadurch gekennzeichnet dass** die erste und/oder zweite Strahlungsquelle (31, 32) eine Heizplatte, eine Heizfolie, eine Breitband- Lichtquelle, eine monochromatische Lichtquelle, ein Heizstrahler eine Heizschlange, ein Peltier-Element oder ein Mikrowellengenerator ist.

6. Messgerät (10, 110, 210...) nach einem der Ansprüche 1 bis 5, **dadurch gekennzeichnet, dass** mindestens eine der Strahlungsquellen (131, 132) mit Öffnungen (180) zur Durchführung von flüchtigen Substanzen, Gasen und/oder Dämpfen versehen ist.

7. Messgerät (10, 110, 210...) nach einem der Ansprüche 1 bis 6, **dadurch gekennzeichnet, dass** mindestens eine der Strahlungsquellen (31, 32) lösbar über mindestens eine Steckverbindung (33) mechanisch mit dem Gehäuse (20) und/oder elektrisch mit einer Spannungsquelle (34) verbunden ist.

8. Messgerät (10, 110, 210...) nach einem der Ansprüche 1 bis 7, **dadurch gekennzeichnet, dass** die Probeaufnahme (460) mit dem Lastaufnahmebereich koppelbar, beziehungsweise vom Lastaufnahmebereich entkoppelbar ist.

9. Messgerät (110) nach einem der Ansprüche 1 bis 8, **dadurch gekennzeichnet, dass** die erste Strahlungsquelle (131) und die zweite Strahlungsquelle (132) miteinander mechanisch verbunden sind, diese Einheit von einem bewegbaren Gehäuseteil (122) getragen wird und zwecks besserer Zugänglichkeit zur Probeaufnahme (160) um eine im Wesentlichen vertikal stehende Achse (139) verschwenkbar ist.

10. Messgerät (310) nach einem der Ansprüche 1 bis 8, **dadurch gekennzeichnet, dass** die erste Strahlungsquelle (331) mit einem sie tragenden, als Deckel ausgestalteten bewegbaren Gehäuseteil (322) verbunden ist, dieser Deckel um eine im Wesentlichen horizontale Schwenkachse an einem feststehenden Gehäuseteil (321) des Gehäuses zwecks besserer Zugänglichkeit zur Probeaufnahme schwenkbar gelagert ist und die zweite Strahlungsquelle (332) mit dem feststehenden Gehäuseteil (321) fest verbunden ist.

11. Messgerät (10) nach einem der Ansprüche 1 bis 8, **dadurch gekennzeichnet, dass** die erste und die zweite Strahlungsquelle (31, 32) mit einem feststehenden Gehäuseteil (21) fest verbunden sind, und dass die Wägevorrichtung (40) zusammen mit der Probenaufnahme (60) in einem bewegbaren Gehäuseteil (22) angeordnet, zwecks besserer Zugänglichkeit zur Probeaufnahme (60) linear geführt und aus dem feststehenden Gehäuseteil (21) ausfahrbar ausgebildet ist.

12. Messgerät (410) nach einem der Ansprüche 1 bis 8, **dadurch gekennzeichnet, dass** die Wägevorrichtung (440) mit einem feststehenden Gehäuseteil (421) fest verbunden ist und dass mindestens eine der Strahlungsquellen (431) zwecks besserer Zugänglichkeit zur Probeaufnahme (460) auf einem im Wesentlichen horizontal verfahrbaren bewegbaren Gehäuseteil (422) angeordnet ist.

13. Messgerät (110, 310, 410) nach einem der Ansprüche 1 bis 12, **dadurch gekennzeichnet, dass** an den Prüfraum (130, 330, 430) anschliessend, vorzugsweise oberhalb der ersten Strahlungsquelle (131, 331, 431) eine Absaugvorrichtung (170, 370, 470) angeordnet ist.

14. Messgerät (310) nach einem der Ansprüche 3 bis 13, **dadurch gekennzeichnet, dass** die Wand (328) des Prüfraumes (330) zumindest zwischen dem Prüfraum (330) und der Wägevorrichtung (340) vorzugsweise doppelwandig ausgebildet ist und ein, von ausserhalb des Messgerätes (310) angesaugtes oder durch Überdruck in den Prüfraum (330) eingeleitetes gasförmiges Medium, vorzugsweise Luft, zwischen dem Prüfraum (330) und der Wägevorrichtung (340) in der doppelwandigen Wand (328) geführt wird.

15. Messgerät (10, 110, 210...) nach Anspruch 14, **dadurch gekennzeichnet, dass** das gasförmige Medium einen vordefinierten Feuchtigkeitsgehalt aufweist.

16. Messgerät (10, 110, 210...) nach einem der Ansprüche 1 bis 15, **dadurch gekennzeichnet, dass** die Wägevorrichtung (40) eine Kalibriervorrichtung (44, 46, 48, 49) aufweist.

17. Messgerät (10, 110, 210...) nach Anspruch 16, **dadurch gekennzeichnet, dass** die Kalibriervorrichtung (44, 46, 48, 49) ein oder mehrere Kalibriergewichte (49) aufweist, wobei der Massenschwerpunkt des einen oder der mehreren Kalibriergewichte (49) während eines Kalibrierungsvorganges auf oder nahe einer, in Lastrichtung verlaufenden Schwerpunktachse der Probeaufnahme (60) und/oder der Probe (62) liegt.

18. Verfahren zur Feuchtigkeitsbestimmung einer Probe (62) durch Messung des Gewichtsverlustes während einer vorbestimmten Prüfdauer und einem festgelegten Temperaturprofil mit einem Messgerät (10) nach einem der Ansprüche 1 bis 17, **dadurch gekennzeichnet dass** dieses Verfahren im Wesentlichen die folgenden Schritte aufweist:
• konditionieren des Prüfraumes (30) auf eine vorgegebene Temperatur mittels mindestens einer der Strahlungsquellen (31, 32),
• einbringen der Probe (62) in den Prüfraum (30),
• ermitteln des Probengewichts in vorbestimmten Messintervallen und/oder kontinuierliches Erfassen einer Gewichtsabnahme über die gesamte Prüfdauer,
• Auswertung des Messergebnisses und/oder Übermittlung des Messergebnisses an eine Anzeigeeinheit.

19. Verfahren zur Bestimmung der Feuchtigkeitsaffinität einer Probe (62) durch Messung der Gewichtszunahme während einer vorbestimmten Prüfdauer und einem festgelegten Temperaturprofil, mit einem Messgerät (10) nach einem der Ansprüche 1 bis 17, **dadurch gekennzeichnet dass** dieses Verfahren im Wesentlichen die folgenden Schritte aufweist:
• einbringen der Probe (62) in den Prüfraum (30),
• konditionieren der Probe (62) auf einen vorbestimmten Feuchtigkeitsgehalt,
• einstellen des Prüfraumes (30) auf eine vorgegebene Temperatur mittels mindestens einer der Strahlungsquellen (31, 32),
• einbringen eines gasförmigen Mediums in den Prüfraum (30) mit einem bekannten Feuchtigkeitsgehalt bei vordefiniertem Volumenstrom und vordefiniertem Temperaturprofil während der Prüfdauer,
• ermitteln des Probengewichts in vorbestimmten Messintervallen und/oder kontinuierliches Erfassen einer Gewichtszunahme über die gesamte Prüfdauer,
• Auswertung des Messergebnisses und/oder Übermittlung des Messergebnisses an eine Anzeigeeinheit.

20. Verfahren zur Korrektur eines Auftriebsfehlers in den nach den Verfahren der Ansprüche 18 oder 19 erfassten Messwerten, **gekennzeichnet durch** die folgenden Schritte:
a. einbringen eines Referenzkörpers in den Proberaum,
b. ermitteln des Gewichtsgrundwertes des Referenzkörpers,
c. ermitteln der Korrekturgewichtswerte des Referenzkörpers in vorbestimmten Messintervallen und/oder kontinuierliches Erfassen der Gewichtsveränderung über die gesamte Prüfdauer,
d. bilden der Korrekturwerte oder des Korrekturprofils über die ganze Prüfdauer **durch** Subtraktion des Gewichtsgrundwertes von den Korrekturgewichtswerten
e. einspeichern dieser Werte oder des Korrekturprofils in ein Speichermodul,
f. Entnahme des Referenzkörpers,
g. durchführen der Probenmessungen unter Berücksichtigung der ermittelten Korrekturwerte.
